# EUROPEAN PATENT SPECIFICATION

(11) **EP 1 688 034 B1**
(45) Date of publication and mention of the grant of the patent: **12.12.2007**
(21) Application number: 05002583.2
(22) Date of filing: 08.02.2005
(51) Int. Cl.: A01G 17/06

(54) **Tensioning device for crop-supporting wires**
Spannvorrichtung für Spalierdrähten
Dispositif pour tendre des fils en cultures de palissage

(43) Date of publication of application: 09.08.2006
(73) Proprietor: Ripoll Marcet, Laura, 08380 Malgrat (ES); Carafi Verge, Pedro, 08292 Esparraguera (ES)
(72) Inventor: Ripoll Marcet, Laura, 08380 Malgrat (ES); Carafi Verge, Pedro, 08292 Esparraguera (ES)
(74) Representative: Canela Giménez, Teresa

(56) References cited:
- GB-A- 685 971
- US-A- 2 416 708
- US-A- 2 496 249
- US-A1- 2001 052 593

## Description

### FIELD OF THE INVENTION

The present invention consists of a tensioning device for the wires or cables that support certain crops arranged in rows, such as grapevines, said device also allowing for different degrees of tensioning.

### PRIDR ART

In grapevine cultivation steel wires, around which grapevine shoots are coiled, are frequently used. Farmers lean said wires on trellises or posts and are bound to carry out successive tensioning and loosening tasks of these supporting wires due to the progressive growing, pruning and manual or mechanical harvesting of the grapevines.

In order to carry out said tensioning of the grapevine supporting wires, manual methods, that are intrinsically cumbersome and in addition require considerable strength, are usually employed. It is also to be noted that said tensioning process may be repeated several times during the growth of the grapevines.

Documents GB-A-685 971 and US-A-2 416 708 disclose tensioning devices according to the preamble of the claim 1 of the present application.

The main object of the present invention is to provide a device that enables performing the tensioning and loosening of said supporting wires in a convenient and less strenuous way, being another of the objects of the present invention to provide a device that allows for different degrees of tensioning of said supporting cables.

### EXPLANATION OF THE INVENTION

This invention describes according to claim 1 a tensioning device for wires that support crops, such as grapevine, comprising a member joining the device to the posts or trellises that fasten the grapevine supporting cables, said member having a rotating axis actuated by two levers that perform a lever action that facilitates the rotation of said rotating axis, said rotating axis comprising one or several toothed wheels that are locked thanks to a ratchet action by a metallic sheet that is inserted through an insertion guide on which said metallic sheet rests.

The steel cables that support the grapevines extend through respective through holes provided in the lever handles so that the upward and downward movements of said levers result in a higher or lower tension of said supporting cables.

Despite its simplicity, the above-described device fulfils all the inventive objects that the invention intends to solve. In a simple and economical fashion it is provided a device that allows for convenient tensioning of the wires that support the grapevines and additionally permits successive degrees of tension simply by automatically removing the butt sheet locking the ratchet, then performing a further tensioning thanks to the lever handles and finally putting back the ratchet butt.

Furthermore, thanks to the addition of a lever, the use of force becomes less necessary. Said lever is preferably a double-support lever and may be either straight or bent in order keep crops from being damaged due to an excessive length of the lever.

### BRIEF DESCRIPION OF THE DRAWINGS

For a better interpretation of the invention this specification is accompanied by drawings that illustrate by way of a non-limiting example an embodiment of said invention.

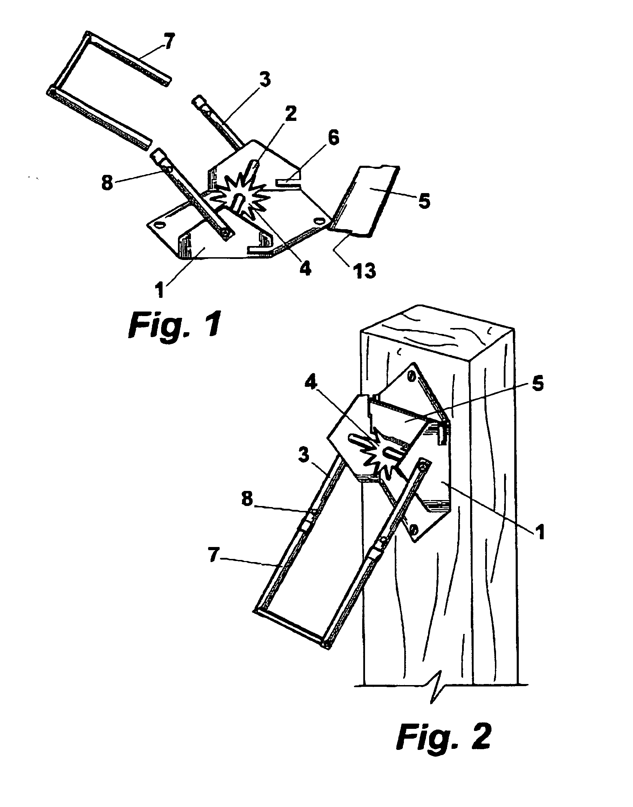

Figure 1 shows a perspective view of the parts that comprise the device of the invention, the butt sheet of this device and the extension piece of the levers being shown in an exploded view and in alignment.
Figure 2 is another view, like figure 1, but with the butt sheet shown in working condition.

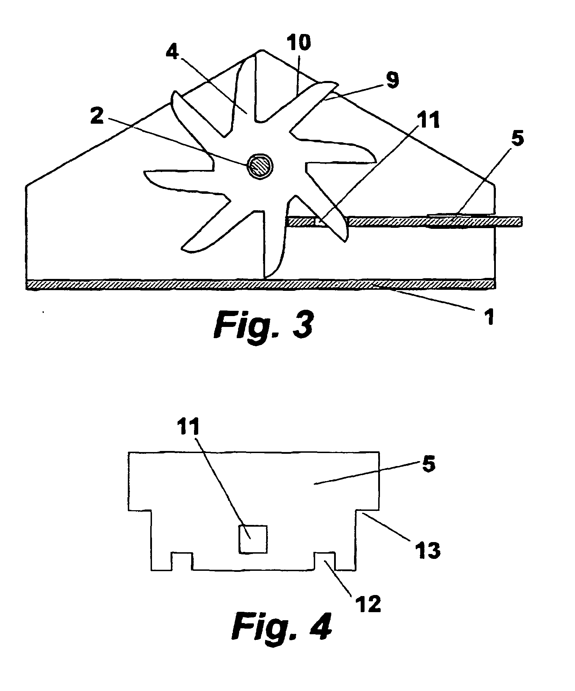

Figure 3 is an enlarged sectional view of the toothed wheel and the butt sheet.
Figure 4 is top view of the butt sheet of the device of the invention in accordance with one of the preferred embodiments.

### DETAILED EXPLANATION OF THE INVENTION

The invention consists of a tensioning device meant for supporting wires for crops, such as grapevine, such tensioning being performed through a member (1) joining the device to the posts of trellises that fasten the supporting cables of the grapevines, said joining member (1) having a rotating axis (2) actuated by two levers (3) that perform a lever action which facilitates the rotation of said rotating axis (2), said rotating axis (2) comprising one or several toothed wheels (4) that are locked through a ratchet action by a metallic sheet (5) that is inserted through an insertion guide (6) on which it rests.

The teeth of the toothed wheels preferably have a straight profile on their leading sides (9), that is, on their locking sides, whereas said toothed wheels have a straight profile that ends up in curved shape on the releasing side (10). The immediate consequence of such an arrangement is a better locking of the metallic sheet (5) and an improved release of said sheet (5) whenever the axis (2) is rotated in the opposite direction to that of the locking. Additionally, this shape makes the teeth more resistant.

In one of the possible embodiments of this invention, the metallic sheet (5) is provided with a window (11) through which the teeth of the toothed wheel (4) can be inserted, thus improving the locking strength and keeping the sheet from being deformed by the toothed wheel (4). Preferably, said window (11) is square-shaped.

Additionally, said metallic sheet (5) can be provided with grooves (12) that facilitate the removal of said metallic sheet (5) by grabbing it by said grooves (12) with or without the aid of an additional tool.

Thanks to the special conformation of the toothed wheel (4) and the metallic sheet (5) described in the present invention, it is possible to obtain a high strength performance of the locking that even allows for the toothed wheel (4) itself to be made of plain steel, which needs not be case-hardened or tempered, this resulting in the reduction of the manufacturing costs.

In order to have a greater lever force with which to tension the cable or wire that supports the grapevines, the levers (3) are provided with an extension (7) that fits into said levers by any given method, matching, for instance.

Hence, when it is time for the farmers to adapt the tension of the supporting wire, either during the periodical maintenance of the crops or during harvesting, it is possible for them to save a great deal of time, effort and means thanks to the new device provided by the present invention.

The supporting wire extends through respective through holes (8) present in the lever arms, so that the wire is retained by means of a knot or any other means against said levers (3).

The laborer removes the metallic sheet (5) from the insertion guide (6), for instance by pulling down the lever further, which will make the teeth shape of the wheel or wheels pull the metallic sheet (5) up the insertion guide (6).

Thereafter, once the metallic sheet (5) is separated from the toothed wheel or wheels, the laborer can tension the grapevine supporting wires as much as he needs to by pulling up of bringing down the levers (3) aided in the lever action by the extension (7) of said levers (3).

Once the tension applied to said steel cable is deemed to be sufficient, the metallic sheet (5) falls in its insertion guide (6) after the rotation of the levers is stopped, so that said sheet locks the toothed wheel or wheels (4), thus blocking the rotation of the rotating axis (2), which ensures a secure, simple and stable tensioning of the wire.

In the preferred embodiment of the invention, the joining member (1) is joined by any means, it can be, for instance, screwed to the supporting posts or trellises of the steel cables, so that the insertion guide (6) ends up in a vertical position.

By placing the metallic sheet (5) in the insertion guide (6) as described above, said metallic sheet (5) rests safely, which keeps it from falling by accident. Also, it is for this reason that the side ends of said metallic sheet (5) are provided with a bend (13) that drives the sheet (5) into the insertion guide (6) and prevents any lateral displacements of the sheet.

Additionally, the extension (7) that acts as lever arm of the levers (3) is a double support extension and can be relatively bend-shaped in order to keep the crops, due to its length, from being damaged when it is pulled down.

It is understood that in the present case any details that do not alter or modify the scope of the invention can be varied.

## Claims

1. TENSIONING DEVICE FOR CROP-SUPPORTING WIRES comprising a member that joins the device to fastening posts or trellises of the grapevine supporting cables, said joining member (1) having a rotating axis (2) whose rotation is actuated by two levers (3), said rotating axis (2) further having one or several toothed wheels (4) that are locked thanks to a ratchet action **characterised in that** the ratchet action is performed by a metallic sheet (5) that is inserted in an insertion guide (6) on which it rests; said crop-supporting wire being attached to said levers (3).

2. TENSIONING DEVICE FOR CROP-SUPPORTING WIRES, according to claim 1, **CHARACTERIZED in that** the teeth of said toothed wheel or wheels (4) have a straight profile on the locking and leading side (9) thereof, while they are slightly curved on the opposed release side (10).

3. TENSIONING DEVICE FOR CROP-SUPPORTING WIRES, according to the previous claims, **CHARACTERIZED in that** said metallic sheet (5) is provided with a preferably square-shaped window (11).

4. TENSIONING DEVICE FOR CROP-SUPPORTING WIRES, according to the previous claims, **CHARACTERIZED IN THAT** it is provided with an extension (7) of said arms or levers (3), attached to said device by any given means, such as matching.

5. TENSIONING DEVICE FOR CROP-SUPPORTING WIRES, according to the previous claims, **CHARACTERIZED IN THAT** the side ends of said metallic sheet (5) have a bend (13) for said sheet (5) to be driven into said insertion guides (6), thus preventing any lateral displacement.

6. TENSIONING DEVICE FOR CROP-SUPPORTING WIRES, according to the previous claims, **CHARACTERIZED IN THAT** said levers (3) are provided with through holes (8) to which said crop-supporting wires are attached.

7. TENSIONING DEVICE FOR CROP-SUPPORTING WIRES, according to the previous claims, **CHARACTERIZED IN THAT** said extension (7) of said arms or levers (3) has a double support and is relatively bent-shaped so as to prevent damaging the crops.

8. TENSIONING DEVICE FOR CROP-SUPPORTING WIRES, according to the previous claims, **CHARACTERIZED IN THAT** said metallic sheet (5) is provided with grooves (12) on its surface so as to facilitate its removal.

## Patentansprüche

1. Spannvorrichtung für Spalierdrähte, enthaltend ein Element (1), das die Vorrichtung mit Befestigungspfosten oder gittern der Weinstocktragkabel verbindet, welches Verbindungselement, (1) eine Drehachse (2) hat, deren Drehung durch zwei Hebel (3) betätigt wird, welche Drehachse (2) ein Zahnrad oder mehrere Zahnräder (4) hat, die mittels einer Sperrklinkenwirkung verriegelt werden, **dadurch gekennzeichnet, dass** die Sperrklikenwirkung durch eine Metallplatte (5) vollzogen wird, die eine Einschubführung (6) eingefüht wird, auf welcher sie aufliegt; wobei der Spalierdraht an den Hebeln (3) befestigt ist.

2. Spannvorrichtung für Spalierdrähte nach Anspruch 1, **dadurch gekennzeichnet, dass** die Zähne des Zahnrads oder der Zahnräder (4) an ihrer Verriegelungs- und Vorderflanke (9) ein gerades Profil haben, während sie auf der entgegengesetzten Freigabeseite (10) geringfügig gekrümmt sind.

3. Spannvorichtung für Spalierdrähte nach den vorstehenden Ansprüchen, **dadurch gekennzeichnet, dass** die Metallplatte (5) mit einem vorzugweise quadratisch geformten Fenster (11) versehen ist.

4. Spannvorrichtung für Spalierdrähte nach den vorstehenden Ansprüchen, **dadurch gekennzeichnet, dass** sie mit einer Verlängerung (7) der Arme oder Hebel (3) versehen ist, die an der Vorrichtung durch eine beliebige geeignete Einrichtung, beispielsweise durch eine Passung angebracht sind.

5. Spannvorrichtung für Spalierdrähte nach den vorstehenden Ansprüchen, **dadurch gekennzeichnet, dass** die seitlichen Enden der Metallplatte (5) eine Biegung (13) für die in die Einschubführungen (6) zu treibende Platte (5) haben, wodurch jegliche seitliche Verschiebung verhindert wird.

6. Spannvorrichtung für Spalierdrähte nach den vorstehenden Ansprüchen, **dadurch gekennzeichnet, dass** die Hebel (3) mit Durchgangsöffnungen (8) versehen sind, an welchen die Spalierdrähte angebracht sind.

7. Spannvorrichtung für Spalierdrähte nach den vorstehenden Ansprüchen, **dadurch gekennzeichnet, dass** die Verlängerung (7) der Arme oder Hebel (3) eine Doppelhalterung hat und relativ gebogen geformt ist, um so eine Beschädigung der Pflanzen zu verhindern.

8. Spannvorrichtung für Spalierdrähte nach den vorstehenden Ansprüchen, **dadurch gekennzeichnet, dass** die Metallplatte (5) mit Nuten (12) an der Oberfläche versehen ist, um ihr Entfernen zu erleichtern.

## Revendications

1. Dispositif de tension pour des fils de support de cultures, comprenant un organe (1) qui relie ce dispositif à des poteaux ou des treillis de fixation des câbles de support de la vigne, ledit organe de liaison (1) comprenant un axe rotatif (2) dont la rotation est actionnée par deux leviers (3), ledit axe rotatif (2) comprenant de plus une ou plusieurs roues dentées (4) qui sont verrouillées grâce à un mécanisme à cliquet, **caractérisé en ce que** l'action de verrouillage par cliquet est réalisée par une feuille métallique (5) qui est insérée dans un guide d'insertion (6) sur lequel elle repose; ledit fil de support de cultures étant attaché auxdits leviers (3).

2. Dispositif de tension pour des fils de support de cultures selon la revendication 1, **caractérisé en ce que** les dents de ladite ou desdites roues dentées (4) ont un profil rectiligne du côté (9) de verrouillage et de guidage de celles-ci, tandis qu'elles sont légèrement courbées du côté opposé (10) de libération.

3. Dispositif de tension pour des fils de support de cultures selon les revendications précédentes, **caractérisé en que** ladite feuille métallique (5) comprend une ouverture (11) de préférence de forme carrée.

4. Dispositif de tension pour des fils de support de cultures selon les revendications précédentes, **caractérisé en ce qu'**il comprend une extension (7) desdits bras ou leviers (3), fixée audit dispositif par un quelconque moyen donné approprié.

5. Dispositif de tension pour des fils de support de cultures, selon les revendications précédentes, **caractérisé en ce que** les extrémités latérales de ladite feuille métallique (5) présentent une courbure (13) de sorte que ladite feuille (5) soit engagée dans lesdits guides d'insertion (6), empêchant ainsi un quelconque déplacement latéral.

6. Dispositif de tension pour des fils de support de cultures, selon la revendication précédente, **caractérisé en ce que** lesdits leviers (3) comprennent des trous débouchants (8) auxquels lesdits fils de support de cultures sont attachés.

7. Dispositif de tension pour des fils de support de cultures, selon les revendications précédentes, **caractérisé en ce que** ladite extension (7) desdits bras ou leviers (3) comprend un support double et est de forme relativement courbée afin d'éviter d'abîmer les cultures.

8. Dispositif de tension pour des fils de support de cultures, selon les revendications précédentes, **caractérisé en ce que** ladite feuille métallique (5) comprend des cannelures (12) sur sa surface afin de faciliter son retrait.
